# EUROPÄISCHE PATENTSCHRIFT

(11) **EP 0 477 462 B1**
(45) Veröffentlichungstag und Bekanntmachung des Hinweises auf die Patenterteilung: **08.06.1994**
(21) Anmeldenummer: 91105407.0
(22) Anmeldetag: 05.04.1991
(51) Int. Cl.: A01K 63/04, B01F 3/04, C02F 3/24

(54) **Vorrichtung zum Anreichern von Gewässern mit Sauerstoff**
Device for enriching waters with oxygen
Dispositif pour enrichir les eaux en oxygène

(30) Priorität: 27.09.1990 DE 4030560
(43) Veröffentlichungstag der Anmeldung: 01.04.1992
(73) Patentinhaber: SANWA SEIDLITZ GMBH, D-34549 Edertal (DE)
(72) Erfinder: Seidlitz, Ulrich, W-3593 Edertal-Rehbach (DE)
(74) Vertreter: Walther, Horst, Dipl.-Ing.

(56) Entgegenhaltungen:
- EP-A- 0 359 965
- DE-A- 3 230 123
- DE-U- 8 802 347
- US-A- 4 166 086

## Beschreibung

Die Erfindung betrifft eine Vorrichtung zum Anreichern von Gewässern mit Sauerstoff, die der Aufzucht und dem Transport von Fischen dienen.

Die Aufzucht von Fischen erfolgt in sogenannten Fischteichen; der Transport von lebenden Fischen auf Lastkraftwagen erfolgt in dafür vorgesehenen Behältern.

Aus dem deutschen Gebrauchsmuster DE-U- 88 02 347 ist eine Vorrichtung der eingangs genannten Art bekannt. Hierbei wird das Wasser unter Bildung eines dünnen Wasserfilmes mit Sauerstoff angereichert. Diese Anlage arbeitet im stationären

Betrieb, außerhalb des eigentlichen Behälters oder des Fischteiches. Das bedeutet, daß derart mit Sauerstoff angereichertes Wasser nach erfolgter Anreicherung in das Gewässer zurückgeführt werden muß. Insbesondere bei Anwendung dieses Verfahrens bei großen Fischzuchtbecken ergibt sich hierbei, daß im Bereich der Einleitung des so angereicherten Wassers eine relativ hohe Sauerstoffdichte zu verzeichnen ist; hingegen mit zunehmendem Abstand von dem Ort der Einleitung des mit Sauerstoff angereicherten Wassers der Sauerstoffgehalt in dem Gewässer stark abnimmt. Es ist zwar möglich, durch die Anordnung entsprechender Rohrleitungen um ein derartiges Becken bzw. Gewässer herum das mit Sauerstoff angereicherte Wasser an mehreren Stellen des Beckens einzuleiten, jedoch erfordert dies die Installation eines langen und damit teuren Rohrleitungssystems.

Auch die Wartung eines solchen Rohrleitungssystems ist kostenaufwendig

Der Erfindung liegt daher die Aufgabe zugrunde, eine Vorrichtung der eingangs genannten Art zu schaffen, bei der das gesamte Gewässer innerhalb eines bestimmten Zeitraumes gleichmäßig mit Sauerstoff angereichert werden kann, wobei sichergestellt sein soll, daß die zugeführte Sauerstoffmenge nach Möglichkeit vollständig vom Wasser aufgenommen wird, so daß der Verlust an Sauerstoff möglichst gering gehalten wird.

Die Aufgabe wird erfindungsgemäß gelöst durch eine unter der Wasseroberfläche schwimmende Einrichtung zur Erzeugung eines vertikal nach oben gerichteten Wasserstrahles, wobei ein die Einrichtung überdeckender und mit dieser verbundener Hüllkörper vorgesehen ist, in den der Sauerstoff eingespeist wird, wobei ein wesentlicher Teil des Hüllkörpers hierbei über die Wasserfläche hinausragt. Der Vorteil der Begasung des Wassers mit Sauerstoff unter dem Hüllkörper besteht darin, daß hierbei auch mit einem gewissen Sauerstoffüberdruck gearbeitet werden kann, wobei durch diese Maßnahme der Sauerstoffgehalt im Wasser gesteigert werden kann.

An dieser Stelle sei erwähnt, daß lediglich die Ausbildung eines aus der Wasseroberfläche austretenden Wasserstrahles nach Art einer Fontäne zu keiner nennenswerten Erhöhung des Sauerstoffgehaltes im Gewässer führt.

Eine derart ausgebildete Vorrichtung kann aufgrund ihrer Schwimmfähigkeit, die durch das unter dem Hüllkörper vorhandene Sauerstoffkissen bewirkt wird, an jeden beliebigen Ort des Gewässers gebracht werden. Im einzelnen ist der Hüllkörper als Halbkugel, beispielsweise aus Kunststoff ausgebildet, wobei die Halbkugel einen sich horizontal erstreckenden umlaufenden Rand aufweist.

Durch den horizontal sich erstreckenden umlaufenden Rand wird eine gewisse Stabilisierung der Schwimmeigenschaften der gesamten Vorrichtung erreicht. Eine weitere Erhöhung der Stabilität wird dadurch erreicht, daß in dem Hüllkörper bzw. der Halbkugel ein als umlaufender Schlauch ausgebildeter Schwimmkörper angeordnet ist.

Die Einrichtung zur Erzeugung eines vertikal nach oben gerichteten Wasserstrahles umfaßt einen Propeller, der mittels eines Gestelles mit dem Hüllkörper verbunden ist.

Die Rotationsgeschwindigkeit des Propellers wird in vorteilhafter Weise so gewählt, daß diese gerade so hoch ist, daß der durch den Propeller erzeugte Wasserstrahl bis an die innere Wandung des Hüllkörpers bzw. der Halbkugel heranreicht, und dort unter Bildung eines Wasserfilmes, sowie einzelner feinst verteilter Wassertröpfchen auf die Wasseroberfläche zurückströmt bzw. zurückfällt. Durch die hierbei entstehende große Querfläche kann das Wasser entsprechend viel Sauerstoff binden.

Nach einem weiteren besonderen Merkmal ist der Propeller in einem wasserdurchlässigen Gehäuse angeordnet, wobei das Gehäuse mit dem Hüllkörper durch ein Gestell verbunden ist.

Das Gehäuse selbst ist etwa zylinderförmig ausgebildet, wobei die Mantelfläche des zylindrischen Gehäuses aus einzelnen mit Abstand zueinander angeordneten senkrechten Stäben besteht. Die Stäbe wirken als Sieb und verhindern, daß grobe Schmutzteilchen von dem Propeller angesaugt werden und so möglicherweise zu einer Zerstörung des Propellers führen.

Außerdem wird durch das derart ausgebildete Gehäuse die gesamte Vorrichtung in Drehung versetzt, wodurch verhindert wird, daß sich an der Außenmantelfläche Fremdteilchen, beispielsweise Blätter, Äste u.ä., ansammeln können.

Nach einem weiteren besonderen Merkmal weist der Hüllkörper mindestens eine seitliche Öffnung auf, deren Abstand von der Wasseroberfläche so gewählt ist, daß die Einrichtung zur Erzeugung des vertikal nach oben gerichteten Wasserstrahles nicht aus der Wasseroberfläche austreten kann. Im Normalfall befindet sich die Öffnung in dem Hüllkörper im Bereich der Wasseroberfläche. Befindet sich die Öffnung unterhalb der Wasseroberfläche, wird innerhalb kürzester Zeit der Gasdruck innerhalb des Hüllkörpers stark ansteigen, mithin der gesamten Vorrichtung mehr Auftrieb verliehen. Umgekehrt gilt, daß bei zu großem Abstand der Öffnung zur Wasseroberfläche überschüssiger Sauerstoff aus der Öffnung abgegeben wird, mithin der Gasdruck in dem Hüllkörper sinkt und hierdurch ein Absenken der gesamten Vorrichtung bewirkt wird.

Nach einem weiteren besonderen Merkmal der Erfindung ist unter dem Hüllkörper eine umlaufende Wanne angeordnet, in der das mit Sauerstoff angereicherte Waser aufgefangen wird, wobei in der Wanne mindestens ein seitlicher Auslaß angeordnet ist. Hierdurch ist sichergestellt, daß das bereits mit Sauerstoff angereicherte Wasser von dem Propeller nicht erneut angesaugt wird. Je weiter der Auslaß von dem Propeller entfernt ist, umso weniger wird von dem bereits mit Sauerstoff angereicherten Wasser angesaugt. Deshalb kann der Auslaß mit einem Ansatz versehen werden, wodurch der Abstand der Öffnung für das austretende Wasser zu dem Propeller weiter erhöht wird.

Eine derartige Wanne kann entfallen, wenn die Vorrichtung in einem Gewässer eingesetzt wird, in dem eine starke Strömung vorherrscht.

In der Zeichnung ist eine beispielsweise Ausführungsform dargestellt.
- Fig. 1: zeigt die gesamte Vorrichtung in einer Seitenansicht im Schnitt;

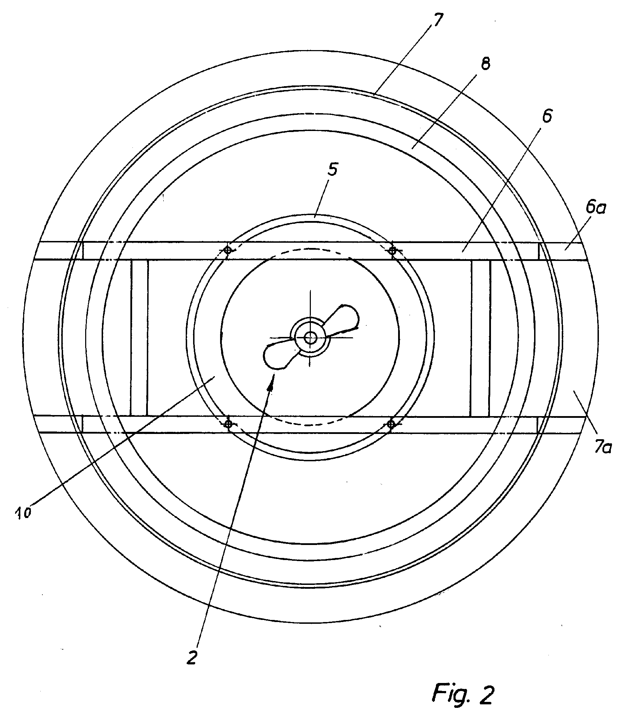

- Fig. 2: zeigt eine Draufsicht von oben.

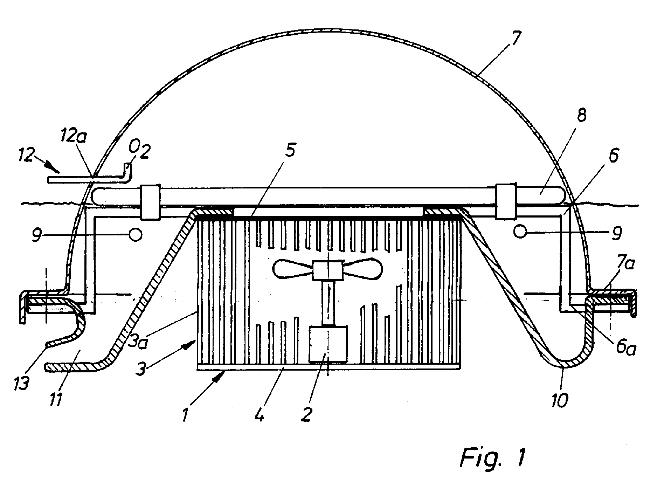

Gemäß Fig. 1 befindet sich in dem mit 1 bezeichneten Gehäuse der insgesamt mit 2 bezeichnete motorbetriebene Propeller, der nach Art einer Schiffsschraube ausgebildet sein kann, und der auf dem Boden 4 des Gehäuses 1 angeordnet ist.

Der zylindrische Mantel 3 des Gehäuses 1 besteht aus einzelnen senkrechten und mit Abstand zueinander angeordneten Stäben 3a, die am Boden 4 des Gehäuses befestigt sind. Im oberen Ende des Gehäuses ist ein Ring 5 vorgesehen, das einerseits die Stäbe aufnimmt und an dem andererseits das Gestell 6 befestigt ist. Auf dem horizontalen Ausleger 6a des Gestelles 6 befindet sich der umlaufende Rand 7a der Kunststoffhalbkugel 7, die mit einer Öffnung 12a für die Sauerstoffleitung 12 versehen ist. Mit dem Gestell 6 verbunden ist der in der Halbkugel umlaufend angeordnete Schlauch 8.

Die seitlichen Öffnungen zur Gewährung des Abstandes des Propellers von der Wasseroberfläche sind mit 9 bezeichnet.

Ebenfalls mit dem Ausleger 6a des Gestelles 6 ist die Wanne 10 verbunden, die der Aufnahme des mit Sauerstoff angereicherten Wassers dient. Der Auslaß der Wanne 10 ist mit 11 und der Ansatz des Auslasses mit 13 bezeichnet.

## Patentansprüche

1. Vorrichtung zum Anreichern von Gewässern mit Sauerstoff, die der Aufzucht und dem Transport von Fischen dienen,
**gekennzeichnet durch**
eine unter der Wasseroberfläche schwimmende Einrichtung zur Erzeugung eines vertikal nach oben gerichteten Wasserstrahles, wobei ein die Einrichtung überdeckender und mit dieser verbundener Hüllkörper vorgesehen ist, in den der Sauerstoff eingespeist wird, wobei sich der wesentliche Teil des Hüllkörpers oberhalb der Wasseroberfläche befindet

2. Vorrichtung nach Anspruch 1
**dadurch gekennzeichnet**, daß der Hüllkörper als Halbkugel (7) ausgebildet ist.

3. Vorrichtung nach Anspruch 2
**dadurch gekennzeichnet**, daß die Halbkugel (7) einen sich horizontal erstreckenden umlaufenden Rand (6a) aufweist.

4. Vorrichtung nach Anspruch 1 und 2
**dadurch gekennzeichnet**, daß der Hüllkörper bzw die Halbkugel (7) einen Schwimmkörper aufweist.

5. Vorrichtung nach Anspruch 4
**dadurch gekennzeichnet**, daß der Schwimmkörper als ein in der Halbkugel (7) angeordneter, umlaufender Schlauch (8) ausgebildet ist.

6. Vorrichtung nach Anspruch 1
**Dadurch gekennzeichnet**, daß die Einrichtung einen Propeller (2) umfaßt, der mittels eines Gestelles (6) mit dem Hüllkörper (7) verbunden ist.

7. Vorrichtung nach Anspruch 6
**dadurch gekennzeichnet**, daß der Propeller (2) in einem wasserdurchlässigen Gehäuse (1) angeordnet ist, wobei das Gehäuse (1) mit dem Hüllkörper (7) mittels des Gestelles (6) verbunden ist.

8. Vorrichtung nach Anspruch 7
**dadurch gekennzeichnet,** daß das Gehäuse (1) zylinderförmig ausgebildet ist, wobei die Mantelfläche (3) des Gehäuses (1) aus einzelnen mit Abstand zueinander angeordneten senkrechten Stäben (3a) besteht.

9. Vorrichtung nach Anspruch 1
**dadurch gekennzeichnet,** daß der Hüllkörper mindestens eine seitliche Öffnung (9) aufweist, deren Abstand von der Wasseroberfläche so gewählt ist, daß die Einrichtung zur Erzeugung des vertikal nach oben gerichteten Wasserstrahles nicht aus der Wasseroberfläche austritt.

10. Vorrichtung nach Anspruch 6
**dadurch gekennzeichnet,** daß unter dem Hüllkörper eine umlaufende Wanne (10) mit mindestens einem seitlichen Auslaß (11) für den Wasserablauf angeordnet ist.

11. Vorrichtung nach Anspruch 10
**dadurch gekennzeichnet,** daß der Auslaß (11) mit einem Ansatz (13) versehen ist.

## Claims

1. Device for the enriching of waters with oxygen, which serves for the breeding and transport of fish, characterised by an equipment floating under the water surface for the generation of a vertically upwardly directed water stream, wherein a hull body, which covers the equipment and is connected therewith and into which the oxygen is fed, is provided, wherein the substantial part of the hull body is disposed above the water surface.

2. Device according to claim 1, characterised thereby that the hull body is constructed as a hemisphere (7).

3. Device according to claim 2, characterised thereby that the hemisphere (7) has a horizontally extending encircling edge (7a).

4. Device according to claim 1 and 2, characterised thereby that the hull body or the hemisphere (7) has a float body.

5. Device according to claim 4, characterised thereby that the float body is constructed as an encircling hose (8) arranged in the hemisphere (7).

6. Device according to claim 1, characterised thereby that the equipment comprises an impeller (2), which is connected with the hull body (7) by means of a frame (6).

7. Device according to claim 6, characterised thereby that the impeller (2) is arranged in water-permeable housing (1), wherein the housing (1) is connected with the hull body (7) by means of the frame.

8. Device according to claim 7, characterised thereby that the housing (1) is constructed to be cylindrical, wherein the shell surface (3) of the housing (1) consists of individual vertical rods (3a) arranged at a spacing from one another.

9. Device according to claim 1, characterised thereby that the hull body has at least one lateral opening (9), the spacing of which from the water surface is so selected that the equipment for generation of the vertically upwardly directed water stream does not emerge above the water surface.

10. Device according to claim 6, characterised thereby that an encircling trough (10) with at least one lateral outlet (11) for the water outflow is arranged under the hull body.

11. Device according to claim 10, characterised thereby that the outlet (11) is provided with a projection (13).

## Revendications

1. Dispositif pour enrichir en oxygène des eaux servant à l'élevage et au transport de poissons, **caractérisé** par un appareil flottant sous la surface de l'eau, agencé pour produire un jet d' eau dirigé verticalement vers le haut, et où il est prévu une enveloppe recouvrant ledit appareil et fixée à celui-ci, dans laquelle l'oxygène est délivré, la majeure partie de l'enveloppe se trouvant au-dessus de la surface de l'eau.

2. Dispositif selon la revendication 1, **caractérisé** en ce que l'enveloppe a la forme d'une demi-sphère (7).

3. Dispositif selon la revendication 2, **caractérisé** en ce que la demi-sphère (7) comporte un bord périphérique (6a) s'étendant horizontalement .

4. Dispositif selon les revendications 1 et 2, **caractérisé** en ce que l'enveloppe ou la demi-sphère (7) comporte un flotteur.

5. Dispositif selon la revendication 4, **caractérisé** en ce que le flotteur est formé par un tuyau circulaire (8) disposé dans la demi-sphère (7).

6. Dispositif selon la revendication 1, **caractérisé** en ce que ledit appareil comporte une hélice (2) qui est reliée à l'enveloppe (7) au moyen d'un bâti (6).

7. Dispositif selon la revendication 6, **caractérisé** en ce que l'hélice (2) est disposée dans un boîtier (1) perméable à l'eau, ce boîtier (1) étant relié à l'enveloppe (7) au moyen du bâti (6).

8. Dispositif selon la revendication 7, **caractérisé** en ce que le boîtier (1) a une forme cylindrique, où la surface périphérique (3) du boîtier (1) se compose de barreaux verticaux individuels (3a) disposés à distance l'un de l'autre.

9. Dispositif selon la revendication 1, **caractérisé** en ce que l'enveloppe comporte au moins une ouverture latérale (9) dont la distance à la surface de l'eau est choisie de façon que ledit appareil pour produire le jet dirigé verticalement vers le haut n'émerge pas de la surface de l'eau.

10. Dispositif selon la revendication 6, **caractérisé** en ce qu'une cuvette circulaire (10), pourvue d'au moins une sortie latérale (11) pour l'écoulement de l'eau, est disposée sous l'enveloppe.

11. Dispositif selon la revendication 10, **caractérisé** en ce que ladite sortie (11) est pourvue d'un embout (13).
